Europäisches Patentamt

European Patent Office

Office européen des brevets

Publication number: **0 367 266**
**A2**

# EUROPEAN PATENT APPLICATION

Application number: 89120306.9

Date of filing: 02.11.89

Int. Cl.5 **G06K 1/12 , G06K 15/12**

Priority: 04.11.88 JP 278954/88

Date of publication of application:
**09.05.90 Bulletin 90/19**

Designated Contracting States:
**DE FR GB**

Applicant: **SEIKO INSTRUMENTS INC.**
**31-1, Kameido 6-chome Koto-ku**
**Tokyo 136(JP)**

Inventor: **Takemura, Yasuhiro c/o Seiko**
**Instruments Inc.**
**31-1, Kameido 6-chome**
**Koto-ku Tokyo(JP)**
Inventor: **Ueda, Makoto c/o Seiko Instruments**
**Inc.**
**31-1, Kameido 6-chome**
**Koto-ku Tokyo(JP)**

Representative: **Fleuchaus, Leo, Dipl.-Ing. et al**
**Melchiorstrasse 42**
**D-8000 München 71(DE)**

## Digital image outputting apparatus.

The digital image outputting apparatus comprises a first image medium, a second image medium an optical system, an image writing device and a light path switching medium, in which an image is outputted by two steps. Firstly, a light emanating from the image writing device is inserted into a light path of the optical system by the light path switching medium and is projected to the first image medium so that the image is written in the first image medium. Secondly, the image written in the first image medium is projected to the second image medium by the optical system so that the image is formed on the second image medium.

FIG. 1

## DIGITAL IMAGE OUTPUTTING APPARATUS

### BACKGROUND OF THE INVENTION

#### 1. Field of the Invention

The present invention relates to a digital image outputting apparatus for visualizing and outputting a digital image on a paper surface on the basis of the data thereof.

#### 2. Description of the Prior Art

Conventional digital image outputting apparatus comprise a first image medium, which can be exposed for a short time period of one millisecond or less but is difficult to have a large area, a second image medium, which is difficult to expose for the short time period, a laser scanner, which writes an image according to an image data in the first image medium, and a project medium, which project the image written in the first image medium on the second image medium.

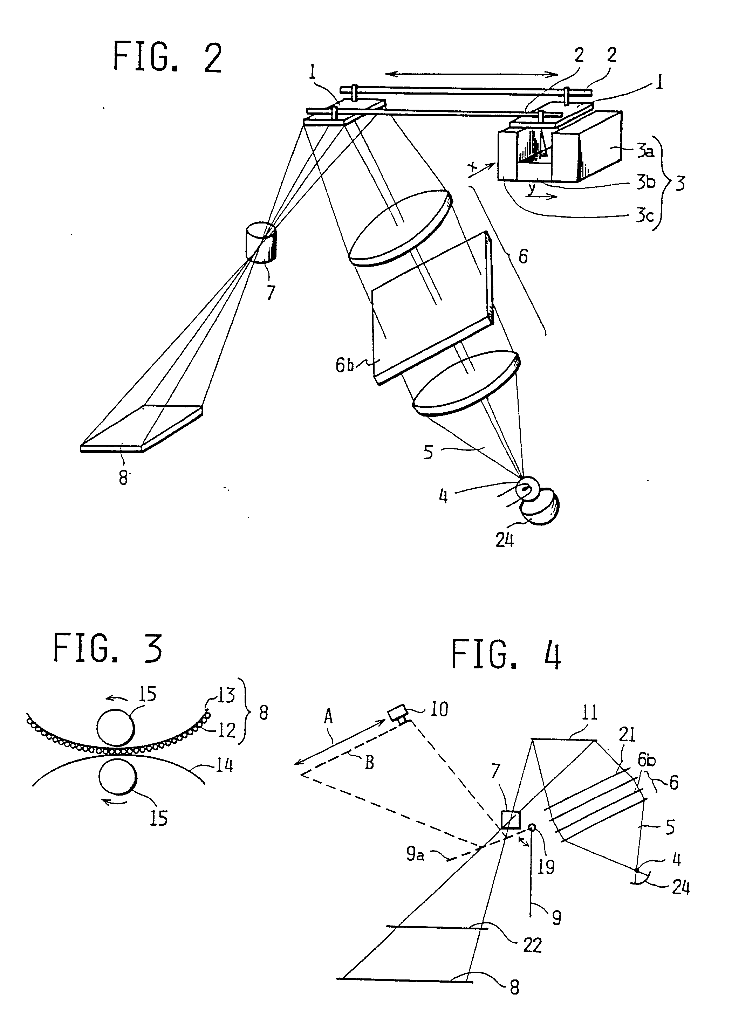

One example of the digital image outputting apparatus is shown in Fig. 2.

In Fig. 2, a photoconductive image medium 1 of Se or the like is supported by a guide bar 2 so that it can move along the guide bar 2. On the other hand, a laser write unit 3 is composed of a corona charger 3a, a laser scanner 3b and a toner developing device 3c. The luminous flux emanating from the laser scanner 3b is scanned at a high speed in the direction of arrow x. The laser write unit 3 as a whole is movable in the direction of arrow y perpendicular to the direction of the arrow x. The laser write unit visualizes the image such that the photoconductive image medium 1 being moved at a constant speed in the direction of the arrow y is given at first a electric potential by the corona charger 3a, then a selective electric potential distribution by the laser scanner 3b, and a toner according to the electric potential distribution by the toner developing device 3c. The photoconductive image medium 1 thus written with the image in the form of toner density distribution is moved over the guide bar 2 to another position. A luminous flux 5 emanating from a light source 4 is condensed by a condenser lens system 6 into a parallel or converged luminous flux to go into the photoconductive image medium 1. The luminous flux 5 is reflected by the photoconductive image medium 1 and is focused on a microcapsule paper 8 by a projection lens 7 so that the image written in the photoconductive image medium 1 is imaged on the microcapsule paper 8.

However, such outputting apparatus has to move the laser scanner having the precise moving part in the direction of arrow y so that the image to be written is distorted by vibrations caused by the movement.

In case, moreover, three images corresponding to three primary colors are written in the photoconductive image medium individually and are exposed one over another on the microcapsule paper to form a color output image. the positions to be written with the three images have to be precisely registered. For these registrations. the position of the laser scanner in the y direction and a rotating angle of a polygon mirror used in the laser scanner have to be precisely detected. In the image writing positions. moreover. the positions of a writing laser spot have to be precisely aligned among the three images. and the same side of the polygon mirror has always to be used when the same line of the image is to be scanned. Thus, the scanning speeds in the x and y directions and the rotating speed of the polygon mirror have to be controlled with a technically high difficulty so that the production cost of the apparatus is increased.

### SUMMARY OF THE INVENTION

An object of the present invention is to provide the digital image outputting apparatus for forming a written image of high quality.

Another object of the present invention is to provide the digital image outputting apparatus for writing an image of high resolution by a relatively simple structure.

To realize above objects, the digital image outputting apparatus of the present invention comprises the first image medium such as a liquid crystal device, the second image medium such as a microcapsule paper, an optical system which projects an image of the first image medium to the second image medium, an image writing device which writes a desired image in the first image medium and is arranged in a conjugate position with the first image medium to a projection lens arranged between the first image medium and the second image medium, and a light path switching medium.

The apparatus of the present invention outputs the image using an image writing step and an image projecting step.

The image writing step is that the light emanating from the image writing device is inserted into the light path of the optical system by the light path switching medium and is projected on the first image medium through the projection lens. As a result, the desired image is written in the first image medium.

The image projecting step is that the image written in the first image medium is projected on the second image medium by the optical system. As a result, the desired image is formed on the second image medium.

## Brief Description of the Drawings

Fig. 1 is a schematic diagram showing the optical system of the digital image outputting apparatus of the present invention;

Fig. 2 is a schematic diagram showing the optical system of the prior art of the digital image outputting apparatus;

Fig. 3 is a schematic diagram showing the developing portion of the microcapsule paper;

Fig. 4 is a schematic diagram showing the projecting optical system of one embodiment of the present invention;

Fig. 5 is a schematic diagram showing the LED head used in the embodiment of the present invention;

Fig. 6 is a schematic diagram showing the liquid crystal shutter array;

Fig. 7 is a schematic diagram showing the photoconductive liquid crystal panel; and

Fig. 8 is a flow chart showing the auxiliary scanning and the writing in the embodiment of the present invention.

## Description of the Preferred Embodiments

Now the present invention will be explained in detail with reference to the embodiments thereof shown in the attached drawings.

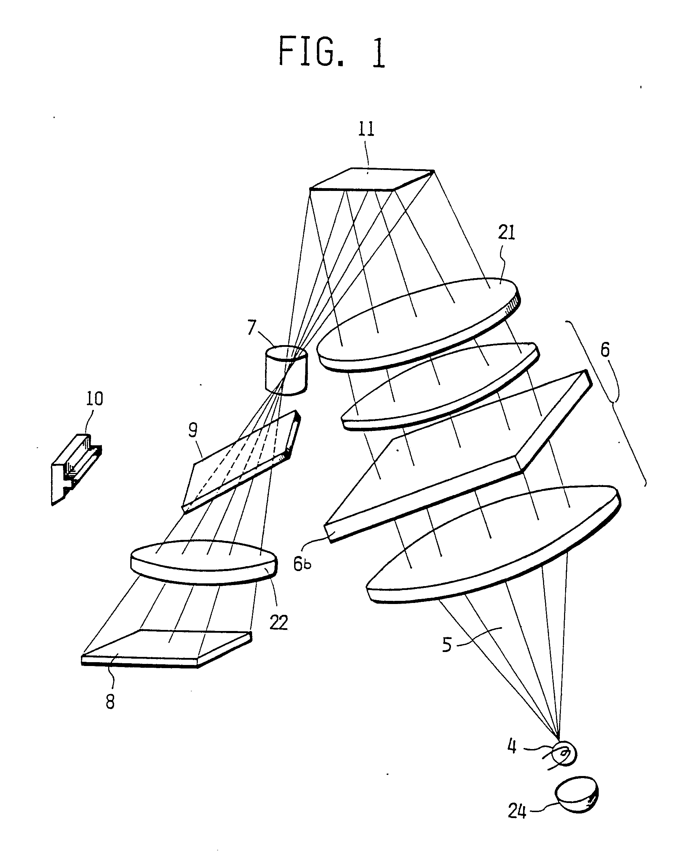

Fig. 1 is a diagram showing the concept of an optical system of the embodiment of the present invention. An LED array head 10 is so supported that it moves in a plane containing its light emitting portion and in a direction generally vertical to the scanning direction of the light emitting portion. The moving plane of the light emitting portion of the LED array head 10 and a photoconductive liquid crystal panel 11 are positioned in conjugate relation to a projection lens 7 through a plane mirror 9. The transverse ratio of the photoconductive crystal panel 11 to the plane containing the light emitting portion of the LED array head 10 is 1 or less. The photoconductive liquid crystal panel 11 is a combination of a liquid crystal panel and a photoconductive layer. If the photoconductive liquid crystal panel 11 is irradiated with an optical energy under a certain bias electric field, the reflectivity of its irradiated portion changes from low to high levels or vice versa. The photoconductive layer is set to have sensitivity to the luminescent wavelength of the LED array head 10.

If, at this time, the liquid crystal material is exemplified by a ferroelectric liquid crystal such as SmC*, the liquid crystal panel maintains the changed reflectivity after removing the bias electric field and a ray of light incident. These characteristics of the liquid crystal panel are called the memory properties.

Here, the photoconductive liquid crystal panel uses the liquid crystal panel which has the above-specified memory properties.

The LED array head 10 is modulated according to image signals and is moved in its movable plane, and a desired image is written in the photoconductive liquid crystal panel 11 applied the bias electric field thereby. After the image has been written, the plane mirror 9 is removed from an optical path which a luminous flux 5 passes. The luminous flux 5 emanating from the light source 4 is condensed by the condenser lens system 6 into the parallel or converged luminous flux, irradiates upon the photoconductive liquid crystal panel 11, is reflected by the photoconductive liquid crystal panel 11, and is focused on the microcapsule paper 8 by the projection lens 7. As a result the image written on the photoconductive liquid crystal panel 11 is formed on the microcapsule paper 8. Here, the photoconductive liquid crystal panel 11 is a medium for modulating the optical polarized state. Polarizers 21, 22 are arranged to convert the distribution of the polarized state into a light quantity distribution. At this time, it is of great advantage to a contrast of the image formed on the microcapsule paper 8 that the polarizers 21, 22 are set in the cross Nicol with the photoconductive liquid crystal panel 11 being unwritten. A catoptrics spherical mirror 24 is arranged at the back of the light source 4 and reflects the light emanating from the light source 4.

Fig. 3 is a schematic diagram showing the developing portion of the microcapsule paper 8.

The microcapsule paper 8 is that microcapsules 12, which have leuco-dyes and photosensitive resin, are evenly applied to a support film 13. The photosensitive resin of the microcapsules 12 harden in accordance with the quantities of light given so that the image written in the photoconductive liquid crystal panel 11 is formed with a latent image on the microcapsule paper 8. Then, the microcapsule paper 8 is so superposed on a receiver paper 14 that its surface coated with the microcapsules 12 faces the receiver paper 14, and is pressed by a pressure device such as a pressure roller 15. As a result, the microcapsules 12 less exposed are crushed so that the leuco-dyes in the crushed microcapsules are transferred to the receiver paper 14 to form an output image corresponding to the image written in the photoconductive liquid crystal panel 11.

Fig. 4 is a diagram showing the concept of an optical system for explaining the operations of writing an image in the photoconductive liquid crystal panel 11 and projecting the image to the microcapsule paper 8. Fig. 4 is a side view of the optical system of the embodiment of the image output device shown in Fig. 1. When an image is to be written in the photoconductive liquid crystal panel 11, as shown in Fig. 4, the plane mirror 9 rotates on a pivot 19 to take its position 9a, as indicated by broken line. In Fig. 4, the light emitting portion of the LED array head 10 is in a plane B vertical to the surface of the drawing so that the LED array is arranged vertically to the surface of the drawing. Moreover, the luminous flux emanating from LED array head 10 is reflected by the plane mirror 9a and is condensed on the photoconductive liquid crystal panel 11 through the projection lens 7. As a result, the luminous pattern of the LED array head 10 is projected upon the photoconductive liquid crystal panel 11. The luminous pattern of the LED array head 10 is determined by the time-series write signal based upon the image data and is varied with the lapse of time. At the same time, the LED array head 10 is moved at a constant speed synchronized with the write signal in the direction of arrow A of Fig. 4 so that a two-dimensional image is written in the photoconductive liquid crystal panel 11.

At this time, however, the image is recorded as the distribution of the retardation of the liquid crystal on the photoconductive liquid crystal panel 11 but is not converted into a spatial optical strength pattern until the projected light passes through a polarizer and an analyzer upstream and downstream of it. The polarizer and the analyzer correspond to the polarizers 21, 22 shown in Fig. 4.

Here, a write position for writing the image, especially, the position for obtaining a color image by repeating the writing and exposure several times is desired to provide reproducibility as well as possible. In the present embodiment, a primary scanning mechanism includes no mechanical part so that the writing timing can be determined wholly by the electric factors. As a result, the writing position can be adjusted with an excellent reproducibility either by detecting the position of the LED array head to start the image writing on the basis of the timing or by determining the write starting timing according to the timing at which the auxiliary scan is started. Fig. 8 is a flow chart for explaining the writing and auxiliary scanning flows. After the start of the auxiliary scanning, a driving pulse motor has its rotating speed gradually increased to accelerate the auxiliary scanning speed (at Step 101). This pulse motor accomplishes its accelerating drive a predetermined pulse number and takes its constant drive so that the auxiliary scanning speed takes a substantially constant speed (at Step 102). After this, the driving pulse number of the pulse motor reaches a predetermined number, or the auxiliary scanning position by the auxiliary scanning position detecting device comes to a predetermined position. If either of these is detected (at Step 103), the writing operation by the LED array head 10, i.e., the emission of the LED array head 10 is started (at Step 104) after a constant time from the detection signal. After the whole writing of one frame has been ended (at Step 105), the r.p.m. of the auxiliary scanning drive pulse motor is gradually decelerated (at Step 106) so that the auxiliary scanning speed is decelerated to stop (at step 107), and the LED array head 10 returns to the auxiliary scanning start position. Like this, the present embodiment is freed from any factor for dislocating the writing position, if the writing operation is started when the auxiliary scanning position comes the predetermined position.

After the image has been written in the photoconductive liquid crystal panel 11, the written image is projected on the microcapsule paper 8. At this time, the plane mirror 9 is moved to the position, as indicated by solid line, to open the optical path from the projection lens 7 to the microcapsule paper 8. The luminous flux· 5 emanating from the light source 4 is converged by the condenser lens system 6, and goes through the polarizer 21 into the photoconductive liquid crystal panel 11. In this photoconductive liquid crystal panel 11, the luminous flux 5 is subjected to modulations relating to the spatial polarization component according to the recorded retardation distribution and goes as a spatial light quantity pattern into the microcapsule paper 8 through the projection lens 7 and the polarizer 22.

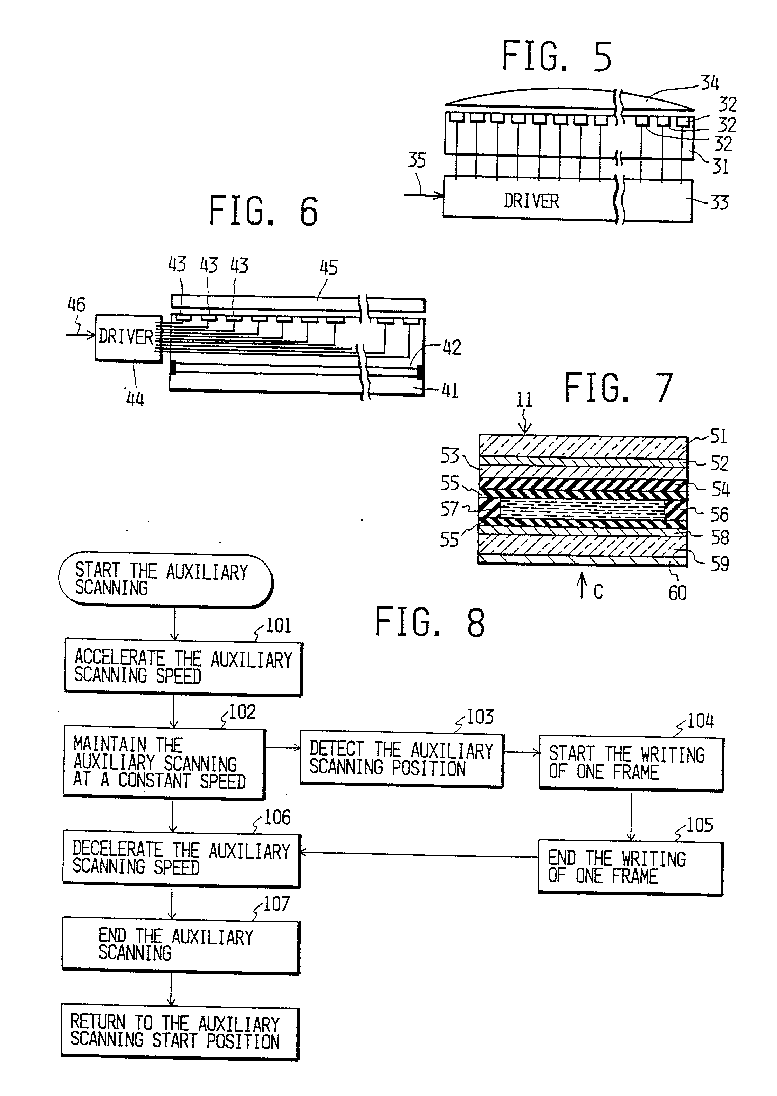

Fig. 5 is a conceptional diagram for briefly describing the structure of the LED array head used here. A number of LED light emitting portions 32 are arranged in one or more rows over a support 31 and are connected with a driver 33 so that their light emissions are modulated on the basis of a write signal 35. In the vicinity of the light emitting portions 32, there are arranged a field lens 34 for condensing the luminous fluxes emanating from the light emitting portions 32 toward the projection lens 7. The field lens 34 is effective to focus efficiently the lights emanating from the individual light emitting portions 32 of the LED array upon the photoconductive liquid crystal panel 11. Without the field lens 34, the image has its uneven brightness made as a result of the shading. Incidentally, the extent of the shading can be lightened by controlling the light emission quantity of the LED without using the field lens 34. It is quite natural that the control of the light emission quantity and the field lens are used jointly.

The writing operation of a monochromatic image is practiced by the method thus far described.

However, a color image is attained as follows: The image data have three data of three primary colors.

The LED array head 10 is driven on the basis of a first data of three primary colors so that the image accordant to the first data is written in the photoconductive liquid crystal panel 11 applied the bias of the electric field. And using the light having the wavelength corresponding to the color of the first data, the image is projected to the microcapsule paper 8 through the projection lens 7 so that the image corresponding to the first data is formed on the microcapsule paper 8.

Successively the above operation is reiterated using a second data and a third data of three primary colors so that the color image is formed on the microcapsule paper 8. At this time, the method of obtaining the light having the wavelength component corresponding to three primary colors is exemplified either by a method of selecting light sources in accordance with the individual wavelengths or by a method of switching a color filter 66 shown in Fig. 4 for the light source having a wide wavelength spectrum.

. In the present invention, moreover, the light source having the array-shaped or two-dimensional optical intensity distribution for writing the image can be exemplified by a liquid crystal shutter array, a CRT (Cathode Ray Tube), or a plasma light emitting array. Of these, the liquid crystal shutter array will be described with reference to the drawings. Fig. 6 is a diagram showing the concept of the structure of the liquid crystal shutter array. In a support 41, there are arranged a linear light source 42 such as a fluorescent lamp or a halogen lamp and one or more rows of fine liquid crystal shutters 43. These liquid crystal shutters 43 are connected with a driver 44 so that the transmissivities are modulated according to a write signal 46 based upon the image data. As a result, the luminous flux emanating from the linear light source 42 has its light quantity modulated according to the transmissivities of the liquid crystal shutters 43. A Fresnel field lens 45 is arranged in the vicinity of the liquid crystal shutter array and has absolutely the same operation as that of the field lens 34 having been described in connection with the LED array head. Here, the Fresnel lens 45 may be replaced by an ordinary lens or used as the field lens of the LED array head. In case the number of lines of the aforementioned liquid crystal shutters 43 is so small that its light emitting pattern is one-dimensional, a two-dimensional image can be formed on the photoconductive liquid crystal panel 11 like the aforementioned case of the LED array head by accomplishing a scanning in the auxiliary direction. Likewise, the two-dimensional image can also be formed on the photoconductive liquid crystal panel 11 by the auxiliary scanning with the CRT having a one-dimensional image pattern. Although having a limitation on the resolution of the resolution of the image, moreover, a two-dimensional image can also be written without any auxiliary scanning, i.e., at one time by increasing the number of lines of the light emitting elements with the LED array, the liquid crystal shutter array, the CRT or plasma light emitting array.

Next the structure of the photoconductive liquid crystal panel 11 will be described in the following with reference to Fig. 7. Fig. 7 is a section showing the concept of the structure of the photoconductive liquid crystal panel 11. A glass substrate 51 is formed with a transparent electrode 52 and further with a photoconductive layer 53 and a dielectric reflecting film 54. Across an SmC* liquid crystal layer 57, moreover, there are formed orientation layers 55. A transparent electrode 58 is formed and supported by a glass substrate 59. Incidentally, between the two orientation layers 55, there is sandwiched a spacer 56 which has functional to connect its upper and lower layers mechanically, to fix the thickness of the SmC* liquid crystal layer 57 and to confine the SmC* liquid crystal. A reflection reducing film 60 is usually formed at the incident side of the glass substrate 59. Here, the photoconductive layer 53 is generally made of a function-separated type organic photoconductive film of a-Si, Se, Se-Te, or Cd-S. Here, the incidence directions of the writing light and the projecting light are in the direction of arrow c of Fig. 7. If, at this time, the reflecting characteristics of the dielectric reflecting film 54 is set such that the reflectivity is high in the photosensitive wavelength range of the microcapsule paper whereas and the transmissivity is high in the wavelength range of near infrared rays corresponding to the writing light of the semiconductor laser, the writing and reading (or projecting )operations can be accomplished from the same side. Since the writing operations are thus accomplished with the electric field being applied in the direction opposite to the polarizing direction of the SmC* liquid crystal, the director of the written portion is reversed to change the retardation. Since the SmC* liquid crystal has the memory properties, the patterns once written will not disappear even after the writing light and the electric field are removed. As a result, the projection can be accomplished with an illumination light after the writing operation has been ended and the electric field has been removed.

In the present invention, the movable plane mirror 9 is used but may be replaced by a half mirror which is fixed in the position 9a of the plane mirror 9, as indicated by the broken line. In this modification, there can be attained an advantage that the moving mechanism for the mirror need not be used.

On the other hand, the photoconductive image medium should not be limited to the liquid crystal panel specified in the present embodiment but can be exemplified by a photoconductor such as Se, a-Si or OPC to be developed by the zerographic method or an electrooptical crystal such as BSO.

As has been described hereinbefore, the digital image outputting apparatus of the present invention can write an image of high resolution by a relatively simple structure without requiring a moving part of high speed operations such as a polygon mirror or a galvano mirror.

Since, moreover, one moving part is eliminated, as described above, the distortion in the image due to vibrations can be reduced, and the wiring timing in the primary scanning direction (i.e., in the direction of the light source array) and the writing timing in the auxiliary scanning direction (i.e., generally vertical to the primary scanning direction) can be accurately aligned to provide a color image having little color drift.

## Claims

1. A digital image outputting apparatus comprising:
first image memory means for holding an image therein optically;
image writing means for writing said image in said first memory means;
a light source;
a condenser lens system for converting a luminous flux emanating from said light source into one of parallel luminous flux and converged luminous flux and applying said converted luminous flux to said first image memory means;
second image memory means for forming said image held in said first image memory means therein;
projection means for projecting said image held in said first image memory means on said second image memory means; and
developing means for developing said image formed on said second image memory means.

2. An apparatus claimed in claim 1; wherein said first image memory means comprises a photoconductive liquid crystal panel.

3. An apparatus claimed in claim 2 further comprising;
first polarizing means arranging between said photoconductive liquid crystal panel and said light source; and
second polarizing means arranging between said photoconductive liquid crystal panel and said second image memory means.

4. An apparatus claimed in claim 3; wherein said first polarizing means and said second polarizing means are set in the cross Nicol with said photoconductive liquid crystal panel being unwritten.

5. An apparatus claimed in claim 1;
wherein said image writing means comprises one of a light source array having multiple fine light sources arranged one- or two-dimensionally and a shutter array having one or a plurality of light sources and a plurality of fine shutters; and
a light path changing means for changing a light path of a light emanating from one of said light source array and said shutter array and projecting said light emanating from one of said light source and said shutter array on said first image memory means through said projection means.

6. An apparatus claimed in claim 1; wherein said second image memory means comprises a plurality of microcapsules including a dyestuff and a photosensitive resin.

7. A method of forming an image on a microcapsule sheet, in which the microcapsule sheet comprises a plurality of microcapsules including dyestuffs and photosensitive resins, the method comprising the steps of
A. writing an image in a first image memory medium, and
B. projecting said image written in said first image memory medium on said microcapsule sheet.

8. The method of forming the image claimed in claim 7;
wherein step (A) further comprises
A1. emanating a light from a light generating device in accordance with an image data,
A2. changing a light path of said light emanating from said light generating device,
A3. projecting said light changed said light path on said first image medium through a projection lens, and
A4. writing said image in said first image medium.

9. The method of forming the image claimed in claim 7;
wherein step (B) further comprises
B1. applying a light of a specific wavelength component to said first image medium,
B2. generating a light of said specific wavelength component having said image written in said first image medium,
B3. projecting said light on said microcapsule sheet through said projection lens, and
B4. forming said image correspondent to said specific wavelength component on said micro-
capsule sheet.

# FIG. 1

FIG. 2

FIG. 3

FIG. 4

# FIG. 5

34
32
32
32
31
35
DRIVER
33

# FIG. 6

43 43 43 45
46
DRIVER
44
42
41

# FIG. 7

11
53
55
57
55
51
52
54
56
58
59
60
↑ C

# FIG. 8

START THE AUXILIARY SCANNING

↓

ACCELERATE THE AUXILIARY SCANNING SPEED  101

↓

MAINTAIN THE AUXILIARY SCANNING AT A CONSTANT SPEED  102 → DETECT THE AUXILIARY SCANNING POSITION  103 → START THE WRITING OF ONE FRAME  104

↓

DECELERATE THE AUXILIARY SCANNING SPEED  106 ← END THE WRITING OF ONE FRAME  105

↓

END THE AUXILIARY SCANNING  107

↓

RETURN TO THE AUXILIARY SCANNING START POSITION